# FASCICULE DE BREVET EUROPEEN

(11) **EP 1 065 179 B1**
(45) Date de publication et mention de la délivrance du brevet: **11.03.2009**
(21) Numéro de dépôt: 00401836.2
(22) Date de dépôt: 28.06.2000
(51) Int. Cl.: C03C 17/09, C03C 17/36

(54) **Procédé de dépôt d'une couche à base de tungstène et/ou molybdène sur un substrat verrier, céramique ou vitrocéramique, et substrat ainsi revêtu**
Verfahren zur Beschichtung eines Glas, keramischen oder glaskeramischen Substrates mit einer Molybdan und/oder Wolfram enthaltenden Beschichtung und so beschichtetes Substrat
Process for the deposition of a tungsten and/or molybdenum based layer on a glass, ceramic or glass ceramic substrate and coated substrate according to the process

(30) Priorité: 30.06.1999 FR 9908407
(43) Date de publication de la demande: 03.01.2001
(73) Titulaire: SAINT-GOBAIN GLASS FRANCE, 92400 Courbevoie (FR)
(72) Inventeur: Zagdoun, Georges, 92250 La Garenne Colombes (FR)
(74) Mandataire: Renous Chan, Véronique

(56) Documents cités:
- EP-A- 0 560 534
- EP-A- 0 693 463
- EP-A- 1 057 791
- FR-A- 2 744 116
- US-A- 3 785 851
- US-A- 4 462 883
- H.K. PULKER: "Coatings on glass" 1984, ELSEVIER , AMSTERDAM

## Description

L'invention concerne des substrats rigides, notamment des substrats transparents ou semi-transparents comme des substrats verriers ou en vitrocéramique, ou des substrats peu ou pas transparents du type substrats en céramique, donc des substrats généralement isolants sur le plan électrique et aptes à subir sans détérioration des traitements thermiques.

Bien que l'invention ne se limite pas à une telle application, (d'autres applications sont détaillées par la suite), celle-ci sera tout d'abord décrite en référence à la réalisation de dispositifs électroniques, notamment à la réalisation d'écrans émissifs, et plus particulièrement ceux appelés écrans " plats " du type écrans plasma.

Un écran plasma est essentiellement constitué de deux substrats en verre constituant les faces avant et arrière de l'écran, substrats sur lesquels des couches fonctionnelles ont été déposées. Ces couches, déposées sur les faces des substrats en regard, comportent, notamment, des électrodes, au moins un revêtement en matériau diélectrique et des luminophores (photophores), éléments indispensables au fonctionnement de l'écran.

L'invention s'est ainsi intéressée à la fabrication de substrats munis de couches électroconductrices aptes à constituer des électrodes après des traitements de gravure appropriés, tout particulièrement celles utilisant des couches en des métaux hautement conducteurs comme l'argent et le cuivre.

Le document FR-A-2 744 116 décrit un substrat vitrocéramique recouvert d'une conductrice en tungstène ou molybdène déposée par CVD. Cette couche conductrice est directement déposée sur le substrat et est revêtue d'une couche métallique à base d'argent.

Le document EP-A-0 693 463 décrit un substrat, pour écran LCD, comprenant une couche métallique à base de molybdène et une couche de protection à base d'oxyde de Al, Mo, Ta, Cr ou d'un alliage d'oxyde de Mo-Ta, d'une épaisseur comprise entre 300 nm et 10000 nm.

Le document FR-A-2 719 037 décrit un procédé de dépôt de couches conductrices, l'une des couches étant déposée sous vide, l'autre étant déposée par une technique de rechargement par immersion dans un milieu liquide.

On sait déposer des couches de cuivre et d'argent par électrolyse, technique attractive car elle permet d'obtenir des couches métalliques relativement épaisses (par exemple d'une épaisseur comprise entre 1 et 5 µm), ce qui est nécessaire pour atteindre le niveau de conductivité requis dans les écrans plasma. Cependant, cette technique n'est réalisable, dans un temps de production raisonnable, que si le substrat à recouvrir est lui-même suffisamment conducteur au départ. Généralement, au moins pour les faces avant des écrans plasma, on prévoit d'interposer entre le substrat verrier et l'électrode métallique une couche électroconductrice transparente en oxyde métallique dopé, que l'on va elle aussi graver selon un motif différent de celui de l'électrode métallique. Cette couche transparente est par exemple en oxyde d'étain dopé au fluor SnO₂ :F ou en oxyde d'indium dopé à l'étain ITO. Aux épaisseurs où on l'utilise, épaisseurs choisies pour préserver sa transparence, cette couche s'est révélée insuffisamment conductrice pour permettre une électrolyse dans des conditions satisfaisantes.

L'invention a alors eu pour but de remédier à cet inconvénient, notamment par la mise au point d'une nouvelle couche conductrice, pouvant notamment servir à "préparer " la surface d'un substrat isolant du type verrier, céramique, vitrocéramique pour autoriser le dépôt d'une autre couche conductrice métallique par électrolyse.

L'invention a tout d'abord pour objet un procédé de dépôt d'au moins une couche à base de tungstène W et/ou de molybdène Mo par pyrolyse en phase gazeuse sur un substrat en verre, céramique ou vitrocéramique, à partir d'au moins un précurseur de W et/ou de Mo sous forme d'un halogénure métallique et/ou d'un composé organo-métallique, et d'au moins un agent réducteur comme l'hydrogène ou le silane SiH₄, qui se caractérise en ce qu'on dépose la couche à base de tungstène et/ou de molybdène sur au moins une autre couche préalablement déposée sur le substrat, électroconductrice et du type oxyde métallique dopé tel que ITO, SnO2 :F, SnO₂ :Sb, ZnO :Al.

L'halogénure est de préférence un chlorure, comme WCl₆, MoCl₅ ou un fluorure comme MoF₅.

Le composé organo-métallique peut être notamment un carbonyle de métal comme W(CO)₆, ou des alkyl- ou allyl-tungstène, comme le butadiène-tungstène ou le bis-benzène-tungstène.

Le tungstène et le molybdène présentent un certain nombre d'avantages : tout d'abord, ils sont de bons conducteurs électriques, bien que moins conducteurs que le cuivre ou l'argent. Ils peuvent donc faire partie intégrante d'une électrode constituée de la couche selon l'invention et d'une éventuelle seconde couche conductrice du type cuivre ou argent, et contribuer à augmenter la conductivité électrique qu'aurait une couche de cuivre ou d'argent seule.

En outre, ces couches en W ou en Mo se prêtent bien à un dépôt par pyrolyse en phase gazeuse (appelée également CVD ou " Chemical Vapor Deposition " en anglais), à pression atmosphérique, à partir d'halogénures métalliques dont la température de décomposition est compatible avec les substrats envisagés dans l'invention, du type verre notamment. Un dépôt par CVD permet l'obtention de couches généralement bien adhérentes au substrat, et de haute durabilité, ce qui est un avantage.

Enfin, ces couches en W ou en Mo se sont révélées particulièrement compatibles avec les matériaux avec lesquels elles peuvent se trouver en contact : elle se nappent bien, notamment, sur une surface en verre et sur une surface d'oxyde métallique du type SnO₂ :F ou ITO. En outre, le molybdène et le tungstène sont des métaux assez proches du cuivre ou de l'argent. Ils ont notamment des réseaux cristallins similaires. Les couches de W et de Mo offrent aussi des sites de nucléation aux couches de cuivre ou d'argent, qui se déposent de façon très satisfaisante à leur surface, surface sur laquelle elles sont très adhérentes.

En dernier lieu, le tungstène et le molybdène sont des métaux qui résistent aux solutions d'électrolyse habituellement utilisées pour déposer du cuivre par électrolyse, solutions généralement très acides (pH autour de 1). Et de façon inattendue, ils peuvent cependant être gravés si nécessaire avec des techniques de gravure chimique connues, notamment avec des solutions oxydantes composées d'eau Régal et d'acide fluorhydrique.

Quand le substrat envisagé est en verre, on peut faire le dépôt de la couche en W ou en Mo sur le ruban de verre d'une ligne float, notamment dans l'enceinte de flottage. Les précurseurs de type WCl₆ se décomposent ainsi vers 600 à 630°C, et à des températures plus faibles avec WF₆, températures où le ruban de verre a acquis sur ligne sa stabilité dimensionnelle généralement. L'atmosphère du bain float est favorable en ce sens qu'elle est légèrement réductrice.

Un autre avantage du molybdène et du tungstène est qu'ils sont peu oxydables à haute température : ainsi, si on dépose les couches sur le ruban de verre dans l'enceinte de flottage, elles ne s'oxydent pas (ou très peu) lors du passage du ruban de verre dans l'étenderie.

On dépose la couche sur au moins une autre couche préalablement déposée sur le substrat. Comme évoqué plus haut, il s'agit d'une couche conductrice transparente du type oxyde métallique dopé tel que l'oxyde d'étain dopé au fluor SnO₂ :F ou à l'antimoine SnO₂ :Sb, l'oxyde de zinc dopé à l'aluminium ZnO :Al ou l'oxyde d'indium dopé à l'étain ITO. De façon connue, ces couches peuvent également être déposées par pyrolyse, en phase gazeuse ou en phase pulvérulente (on pourra se référer par exemple aux brevets EP-158 399, EP-357 263, WO88/00588 pour le dépôt de couches de SnO₂ :F par CVD et aux brevets EP-573 325 et WO94/25410 pour le dépôt de couches de SnO2 :F par pyrolyse de poudre). On peut ainsi procéder à deux dépôts successifs par pyrolyse sur la ligne float quand il s'agit d'un substrat verrier. Bien sûr, on peut interposer un autre type de couche, ou ajouter un autre type de couche apportant une autre fonctionnalité et/ou participant à la conductivité électrique des couches en métal. Il peut ainsi s'agir des couches " barrière " (par exemple aux alcalins du verre) comme des couches à base de SiO₂ ou d'oxycarbure ou d'oxynitrure de silicium, par exemple décrites dans le brevet EP-518 755, et que l'on peut déposer préalablement sur le ruban de verre float par pyrolyse en phase gazeuse.

Comme vu plus haut, on peut prévoir avantageusement de recouvrir au moins partiellement la couche à base de W ou de Mo selon l'invention d'une couche en un métal ou alliage métallique différent de W ou Mo, notamment plus conducteur que ces deux métaux, comme le cuivre ou l'argent. Le dépôt de cette couche par électrolyse, en reprise, peut se faire de façon satisfaisante jusqu'à plusieurs microns d'épaisseur grâce au niveau de conductivité électrique conféré par la couche en W ou en Mo au substrat, et à la présence de sites de nucléation et la bonne capacité d'adhérence conférées par ces couches. Le dépôt par électrolyse peut se faire en courant continu ou en courant pulsé.

Dans ce dernier cas, il est préférable de recouvrir à nouveau cette couche de cuivre ou d'argent d'une couche protectrice, notamment vis-à-vis de dégradations du type oxydation. Le risque de dégradation évité grâce à cette couche protectrice peut aussi être dû au dépôt ultérieur d'une couche d'émail à bas point de fusion, utilisée pour la fabrication des écrans plasma. La couche de protection préférée est relativement fine et en métal, notamment au moins un métal choisi parmi Ni, Cr, Ti, Ta, Nb, Pd, Zr, notamment un alliage NiCr.
Une couche en métal est préférable puisqu'elle assure le contact électrique avec les couches sous-jacentes. On peut la déposer, de façon connue, par pulvérisation cathodique notamment assistée par champ magnétique à partir de la cible de métal appropriée, ou par électrolyse comme la couche qu'elle protège.

L'invention a également pour objet un procédé de dépôt par électrolyse d'une couche métallique à base de cuivre et/ou d'argent sur un substrat verrier, céramique ou vitrocéramique, recouvert d'une couche électroconductrice transparente en oxyde métallique dopé, notamment du type de ceux cités plus haut. L'électrolyse peut être réalisée en rendant la surface du substrat à recouvrir suffisamment conductrice, par un dépôt préalable d'une couche métallique au moins à base de tungstène ou de molybdène par pyrolyse en phase gazeuse à partir du précurseur du métal en question et de l'agent réducteur mentionnés plus haut.

Les couches en W ou Mo de l'invention permettent ainsi de tirer partie de tous les avantages du procédé d'électrolyse, procédé bien adapté aux dépôts de couches de taille micronique. Les couches déposées par électrolyse sont en outre généralement dépourvues des défauts de type trou d'épingle (" pinholes " en anglais) que l'on peut rencontrer avec les techniques de dépôt sous vide de type pulvérisation cathodique. Le coût d'un tel procédé est en outre bien moindre qu'un procédé de dépôt sous vide. En outre, par un masquage approprié sélectif du substrat avant de le plonger dans le bain d'électrolyse, on peut obtenir des couches directement au motif voulu, sans étape de gravure distincte du dépôt.

On peut après dépôt graver au moins une des couches citées plus haut, notamment pour constituer des électrodes selon des motifs déterminés pour les applications envisagées.

L'invention a également pour objet un substrat rigide, transparent comme du verre, ou encore en céramique ou en vitrocéramique, muni de couches dont une couche métallique à base de tungstène et/ou de molybdène, déposée par pyrolyse en phase gazeuse, puis d'une couche métallique à base de cuivre et/ou d'argent, notamment déposée par électrolyse. Il peut s'agir des substrats obtenus par les procédés décrits plus haut.

On munit le substrat d'une couche électroconductrice transparente, du type oxyde métallique dopé tel que cité plus haut. Il est en effet connu, dans la technique de réalisation des écrans émissifs, notamment en face " avant ", de prévoir sous les électrodes métalliques du type cuivre ou argent, une autre série d'électrodes elles-aussi obtenues par gravure mais à partir de couches conductrices transparentes. Leur rôle est essentiellement de permettre de diminuer la tension d'allumage entre les deux électrodes vis-à-vis des faces avant et arrière, ainsi que d'homogénéiser la décharge plasma entre les deux verres. Cette couche électroconductrice peut être déposée par pyrolyse, mais également par pulvérisation cathodique, notamment réactive en atmosphère oxydante à partir de cible en alliage métallique adhoc. Son épaisseur est de préférence choisie d'au moins 50 nm et notamment d'au plus 500 nm. Elle est de préférence comprise entre 100 nm et 400 nm pour le SnO₂ :F et entre 50 et 120 nm pour l'ITO.

Comme mentionné plus haut, on peut prévoir de munir le substrat d'autres couches fonctionnelles, notamment sous la couche métallique à base de W ou de Mo.

On peut aussi munir la couche à base d'argent ou de cuivre d'une couche protectrice à base d'au moins un des métaux appartenant au groupe comprenant le chrome Cr, le nickel Ni, le titane Ti, le tantale Ta, le niobium Nb, le palladium Pd, le zirconium Zr. Il s'agit, notamment, d'alliages du type alliage Ni-Cr ou acier, ou de chrome. Son épaisseur reste modérée : choisie entre 30 nm et 200 nm. Il faut en effet une épaisseur suffisante pour assurer son rôle de protection, mais cependant limitée, ne serait-ce que pour des raisons de coût et de temps de dépôt.

De préférence, l'épaisseur de la couche en W et en Mo est d'au moins 30 nm, notamment d'au plus 500 nm, de préférence comprise entre 50 nm et 300 nm par exemple entre 70 et 130 nm. Ici, l'épaisseur est déterminée par le niveau de conductivité requis pour faire l'électrolyse, niveau que l'on peut notamment estimer à une résistivité de l'ordre de 5.10⁻⁵ ohm.cm, correspondant à une résistance par carré inférieure ou égale à 10 ohms.

Quant à la couche de cuivre ou d'argent, son épaisseur est usuellement comprise entre 0,1 et 10 µm, par exemple entre 0,5 et 5 µm, notamment entre 1,5 et 3 µm.

Dans le contexte de l'invention, on comprend par " couche " le revêtement usuellement continu qui recouvre le substrat, directement ou par l'intermédiaire d'autres couches/matériaux fonctionnels, et qui peut être destiné à être ultérieurement transformé avant son utilisation dans le produit final. Ainsi, ici les couches métalliques à base de W, Mo et Cu ou Ag peuvent ensuite être gravées pour servir d'électrodes. Il en est de même pour sa couche protectrice et la couche d'oxyde métallique dopé si elles sont présentes. L'invention vise donc le produit " intermédiaire " semi-fini, où les électrodes sont encore sous forme de couches continues, ainsi que le produit " fini " où les électrodes sont au motif voulu.

On peut bien sûr envisager également de déposer directement les couches sous forme discontinue, par exemple à l'aide de masques appropriés lors des dépôts.

Les applications des substrats décrits plus haut peuvent être très diverses, et impliquer un certain nombre d'étapes de transformation. Ainsi, dans le cas où le substrat de type verrier est destiné à être utilisé en tant que face avant d'écran émissif, on peut avantageusement prévoir de recouvrir le substrat, une fois la (les) opération(s) de gravure achevée(s), d'un revêtement protecteur, comprenant au moins une couche à base de matériau diélectrique, notamment à bas point de fusion du type PbO, ou à base d'un mélange de différents oxydes comprenant ou non du PbO

Si au contraire, le substrat de type verrier est plutôt destiné à être utilisé en tant que face arrière d'écran émissif, le substrat muni de ses couches gravées, est ensuite recouvert, au moins partiellement, d'un ou d'une pluralité de revêtement(s) luminophore(s).

Le substrat selon l'invention, s'il est plutôt toujours destiné à être utilisé en tant que face arrière d'écran émissif, se trouve de préférence " compartimenté " en pixels séparés les uns des autres par des parois, généralement constituées en verre à bas point de fusion, notamment à base de PbO.

Elles peuvent aussi transformer le vitrage en miroir. Les mêmes applications peuvent aussi être envisagées quand ces couches sont en association avec des couches de cuivre ou d'argent et éventuellement avec les couches de protection.

Les couches de tungstène ou de molybdène peuvent plus généralement être employées partout où sont nécessaires des électrodes, des amenées de courant, là encore éventuellement en association avec une couche de cuivre ou d'argent. On peut ainsi les utiliser comme résistances chauffantes de vitrages chauffants anti-buée/anti-givre (vitrages équipant des véhicules) ou des plaques en vitrocéramique utilisées dans les appareils de cuisson, voire pour constituer des miroirs chauffants. Bien sûr, on peut adapter les épaisseurs des couches de W/Mo en fonction de leurs applications, et viser notamment des couches plus épaisses si ce sont elles qui apportent la fonctionnalité principale au substrat.

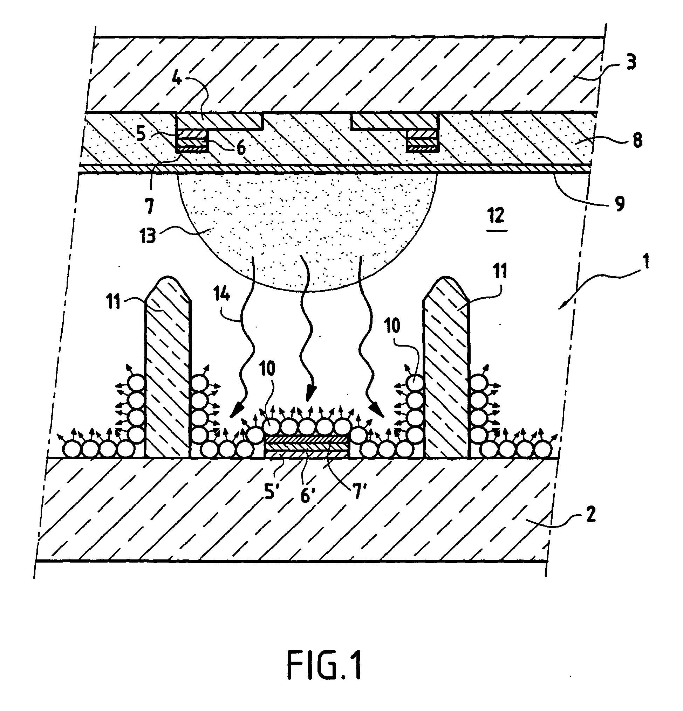

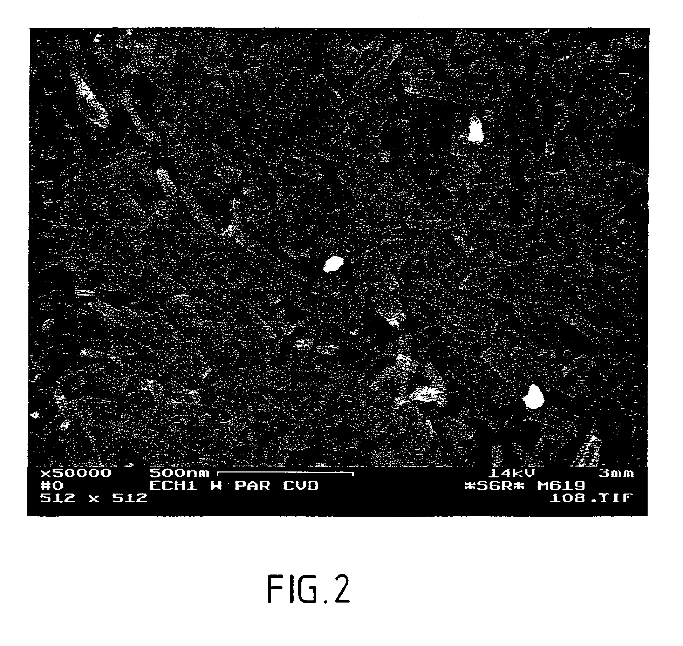

L'invention sera maintenant décrite plus en détails à l'aide d'exemples de réalisation non limitatifs illustrés par les figures suivantes :
□ figure 1 : un schéma illustrant le principe de fonctionnement d'un écran plasma,
□ figure 2 : une photo prise au microscope électronique à balayage d'une couche de tungstène selon l'invention.

Une utilisation particulièrement intéressante des substrats selon l'invention concerne les écrans émissifs du type écran plat à plasma utilisant des substrats verriers. La figure 1 rappelle, très schématiquement, la façon dont un écran plasma fonctionne en représentant une vue partielle en élévation d'un pixel d'un tel écran.

Un tel écran 1 comporte deux substrats de verre 2 et 3 disposés l'un face à l'autre. Le substrat 3 est destiné à être la face avant de l'écran. Il comporte une couche gravée 4 en SnO₂ :F (constituant l'électrode transparente), recouverte d'une couche 5 en tungstène surmontée d'une couche 6 en cuivre puis d'une couche 7 en nickel. Ces couches conductrices constituent les électrodes " principales ". La couche 4 de SnO₂ :F est gravée selon un premier motif et les couches W/Cu/Ni sont identiquement gravées selon un second motif. L'ensemble des couches 4 à 7 est recouvert d'un revêtement protecteur comportant une couche 8 en oxyde à bas point de fusion, par exemple en PbO, surmontée d'une couche 9 protectrice en MgO.

Le substrat 2 est destiné à être la face arrière de l'écran. Il comprend une couche 5' en tungstène surmontée d'une couche 6' en cuivre muni d'une couche 7' en nickel. Elles font fonction d'électrodes " adressées " par rapport à celles de la face avant. Elles sont toutes les trois gravées selon un même motif.

Elles sont recouvertes d'un revêtement luminophore 10. Les luminophores utilisés usuellement dans le cas d'un écran plasma couleur sont Zn₂SiO₄ pour obtenir la couleur verte, BaMgAl₁₄O₂₂ :Eu pour obtenir la couleur bleue et Y₂O₃ :Eu pour obtenir la couleur rouge.

Chaque pixel est séparé des autres par des parois 11 constituées à partir de fritte de verre, par exemple en verre à base de PbO.

L'espace 12 créé entre les deux substrats 2, 3 est rempli d'un gaz, par exemple un mélange de néon et de xénon. Lors de l'utilisation, ce mélange gazeux est excité en appliquant une tension entre les électrodes 5, 6, 7 et 5', 6', 7' de façon à obtenir une décharge plasma 13 contenant des ions Xe⁺ et Ne⁺. Ces ions émettent des photons U.V. 14 de longueur d'onde d'environ 145 nm, qui viennent exciter les luminophores 10, ces derniers convertissant cette énergie excitatrice en lumière visible, rouge, verte ou bleue.

L'invention concerne essentiellement les électrodes 4 à 7 et 5' à 7'. Leur fabrication, aussi bien pour les faces avant 3 qu'arrière 4, se déroule de la manière suivante : les substrats de verre 2, 3 de 3 mm d'épaisseur ont une composition chimique par exemple choisie parmi celles décrites dans le brevet WO96/11887, adaptées aux écrans émissifs, (on peut choisir des substrats dans des gammes d'épaisseurs comprises généralement entre 1,5 et 3 mm).
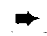 En ce qui concerne la face avant :
   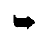 on dépose tout d'abord la couche 4 en SnO₂ :F par CVD en continu sur le ruban de verre float dans l'enceinte de flottage, de façon connue à partir d'un précurseur métallique de type MBTCl (monobutyltrichlorure d'étain) et d'un précurseur fluoré de type acide trifluoroacétique (comme cela est décrit dans les brevets précités). On en dépose une épaisseur de 300 nm,
   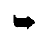 toujours dans l'enceinte de flottage, on dépose par CVD une couche de tungstène à partir de WCl₆ et d'hydrogène dans des proportions appropriées. On peut choisir une épaisseur de par exemple 50 à 200 nm. Ici, on dépose 150 nm. Le dépôt se fait à une température de verre comprise de préférence entre 610 et 630°C. Le dispositif utilisé est conventionnel, similaire à celui utilisé pour déposer la couche précédente en SnO₂ :F. Le précurseur WCl₆, sous forme solide, est préalablement au dépôt introduit dans une enceinte étanche chauffée à environ 200°C sous une tension de vapeur de 7 mm de mercure. On balaye ensuite l'enceinte par un courant d'un mélange gazeux N₂/H₂ dans une proportion volumique d'environ 90/10, courant se chargeant en vapeur de WCl₆ sublimé, à une température maintenue cependant inférieure à 350°C pour éviter que le WCl₆ ne se réduise en W métallique dans le dispositif de dépôt. On se trouve dans un excès d'hydrogène par rapport au WCl₆ dans le courant gazeux, qui vient alimenter la buse de distribution. La figure 2 montre la section de la couche de tungstène analysée par microscopie à balayage électronique par effet de champ : on peut voir que la couche est constituée de bâtonnets (40x500 nm² environ) enchevêtrés sur l'épaisseur de la couche. Par diffraction des rayons X, on a montré que la couche est constituée très majoritairement de tungstène métallique, avec dans certains cas, de faibles traces d'oxyde (WO₃ et H_{0,23} WO₃) identifiables,
   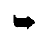 le ruban de verre, une fois en bout de ligne, est découpé et traité de façon approprié.

Les substrats revêtus des couches SnO₂ :F et W subissent ensuite une électrolyse visant à déposer une couche de cuivre au-dessus de la couche de tungstène sur une épaisseur comprise, par exemple, entre 1 et 2 µm. L'électrolyse se déroule de façon connue dans un bain d'électrolyse contenant une solution de cuivrage à pH 1. La solution de cuivrage est faite par exemple de la façon suivante : pour un litre d'eau désionisée, on ajoute 210 grammes de CuSO₄.5H₂O, 27 ml d'H₂SO₄ de densité 1,88 et éventuellement différents additifs connus.

En l'absence de couche de tungstène, la couche de SnO₂:F d'épaisseur 300 nm a une résistance par carré de l'ordre de 20 Ω par carré, ce qui est insuffisant pour permettre l'électrolyse du cuivre de façon satisfaisante : le cuivre se dépose de façon inhomogène, n'a pas l'épaisseur ni la qualité requise. Par contre, l'interposition de la couche de tungstène permet d'atteindre une résistance par carré superficielle du substrat d'au plus 10 ohms.carré.

Suivant l'épaisseur de tungstène et les conditions de dépôt, les couches de tungstène ont une résistance par carré de l'ordre de 2 à 8 ohms.carré, avec une résistivité correspondante comprise entre 10⁻⁵ et 5.10⁻⁵ ohms.cm : ces performances électriques permettent le dépôt du cuivre par électrolyse dans de bien meilleures conditions, la couche de cuivre obtenue est bien adhérente à la couche de tungstène, elle est bien continue, constituée de grains de taille comprise généralement entre 300 nm et 1 µm. Les conditions de dépôt (nature du bain, densité de courant, présence d'additifs, température) permettent, de façon connue dans la technologie de dépôt de couches par électrolyse, de pouvoir ajuster dans une certaine mesure la morphologie de la couche de cuivre. L'électrolyse se fait de façon conventionnelle, la cathode étant constituée par le verre déjà revêtu de la couche de SnO₂ :F et de W, et l'anode est une anode soluble faite d'une plaque de cuivre qui a la même surface que la cathode. Les deux électrodes sont plongées dans la solution d'électrolyse en se faisant face, à une distance l'une de l'autre d'environ 3 cm. L'alimentation électrique est stabilisée. On peut utiliser du courant continu ou du courant pulsé. La densité de courant choisie est d'environ 33 mA/cm² (mais elle peut être choisie différemment, notamment être plus importante, par exemple jusqu'à 1 A/cm²). Le temps de dépôt est adapté en fonction de l'épaisseur de couche que l'on souhaite et de la densité de courant sélectionnée. Ici, pour obtenir une couche de cuivre d'environ 1,8 µm, il a fallu environ 100 secondes.

La résistivité mesurée pour la couche de cuivre est comprise entre 2.10⁻⁶ et 4.10⁻⁶ ohm.cm, soit une valeur proche de celle du cuivre massif qui est de 1,7.10⁻⁶ ohm.cm, preuve de la qualité et de la densité de la couche.

On a observé que le bicouche W/Cu pouvait présenter un aspect métallique noir quand on le regarde du côté de la face nue du substrat 3 en verre. Ce noircissement s'est révélé être un atout, en ce sens qu'il permet d'augmenter le contraste de l'image obtenue par l'écran, en évitant, ou tout au moins en limitant, la réflexion lumineuse de la lumière ambiante sur la surface du cuivre.
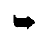 On dépose ensuite sur la couche de cuivre une couche de nickel de 100 nm, par pulvérisation cathodique assistée par champ magnétique à partir d'une cible de nickel, de façon connue.
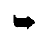 On effectue ensuite la gravure de la couche de SnO2 :F selon un premier motif et celle des couches W/Cu/Ni selon un second motif, par toute méthode de gravure connue dans le domaine de l'électronique en milieu basique ou acide ou par une gravure par plasma, en ayant éventuellement recours à un masque à base d'encre thermofusible déposée par une technique d'impression par jet d'encre comme décrit dans la demande de brevet européen de numéro de dépôt 99.400427.3 du 22 février 1999.
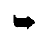 Reste ensuite à déposer de façon connue la couche 8 en oxyde à bas point de fusion.
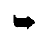 En ce qui concerne la face arrière :
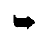 On dépose directement sur le ruban de verre float la couche de tungstène comme pour la face avant, couche d'épaisseur 120 nm et présentant une morphologie similaire et les mêmes performances électriques que celle de la face avant.
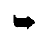 on dépose ensuite la couche de cuivre par électrolyse, d'épaisseur 2 µm puis la couche de nickel par pulvérisation cathodique et d'épaisseur 110 nm, comme dans le cas de la face avant. La couche de cuivre a la même qualité et les mêmes performances électriques que dans le cas de la face avant.
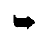 On grave les trois couches selon le même motif de façon connue.
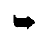 On dépose ensuite, toujours de façon connue, le revêtement luminophore et les parois constituées de fritte de verre pour segmenter la face arrière en pixels.

Aussi bien pour constituer les faces avants que les faces arrières, on peut substituer aux couches SnO₂ :F des couches ITO, et aux couches de nickel des couches de NiCr ou de Cr, notamment.

La gravure de la couche de cuivre peut se faire pendant son dépôt par électrolyse, à l'aide de masques appropriés, on réalise ainsi directement le réseau d'électrodes.

Les couches protectrices à base de nickel (ou autres métaux) peuvent également être déposées par électrolyse, de façon similaire au dépôt par électrolyse des couches de cuivre.

La couche de cuivre peut être remplacée par une autre couche métallique hautement conductrice (Ag, Au, ...).

Pour graver les couches en W, on peut utiliser une solution d'attaque chimique à base d'un mélange d'eau oxygénée et d'ammoniaque. Pour graver les couches en Cu, on peut utiliser une solution comprenant du sulfate ferrique (Fe3+). Ces solutions sont spécifiques du métal à graver. On peut ainsi faire, si on le désire pour une application particulière, un motif de gravure pour la couche de Cu et un autre pour la couche de W (ou de Mo).

On peut par exemple déposer la couche de W (ou de Mo) puis la couche de cuivre et effectuer ensuite les gravures des deux couches. On peut aussi déposer la couche de W (ou de Mo), la graver et déposer ensuite la couche de cuivre directement selon le motif de la couche sous-jacente.

La seconde méthode évite une étape de gravure et permet de déposer le cuivre par électrolyse uniquement là où il le faut, là où il y a le motif de la couche de W gravée, d'où un gain sur la quantité de cuivre utilisée.

En conclusion, les couches de W (ou de Mo) selon l'invention se prêtent bien à un dépôt en continu sur ligne float. Elles sont de bonne qualité et favorisent l'obtention de couches supérieures de métal déposées par électrolyse. Elles ouvrent la voie à l'utilisation de ce mode de dépôt très avantageux quand on a besoin d'électrodes relativement épaisses sur des substrats isolants ou tout au moins insuffisamment conducteurs sur le plan électrique.

Indépendamment de tout dépôt postérieur par électrolyse, ces couches métalliques permettent d'obtenir des niveaux de réflexion lumineuses jusqu'à 60 à 65% sur des substrats verriers, ouvrant la voie à des vitrages réfléchissant ou des miroirs fabriqués en continu directement sur la ligne float.

## Revendications

1. Procédé de dépôt d'au moins une couche (3) à base de tungstène W et/ou de molybdène Mo par pyrolyse en phase gazeuse sur un substrat (1) en verre, céramique ou vitrocéramique à partir d'au moins un précurseur de tungstène et/ou de molybdène sous forme d'un halogénure métallique et/ou d'un composé organo-métallique et d'au moins un agent réducteur tel que l'hydrogène ou le silane, ***caractérisé en ce que** qu'on* dépose la couche (3) à base de tungstène et/ou de molybdène sur au moins une autre couche (2) électroconductrice préalablement déposée sur le substrat (1), du type oxyde métallique dopé tel que ITO, SnO₂ :F, SnO₂ :Sb, ZnO :Al.

2. Procédé selon la revendication 1, ***caractérisé en ce qu'**on* dépose la couche (2) électroconductrice transparente par pyrolyse, notamment par pyrolyse en phase gazeuse.

3. Procédé selon l'une des revendications précédentes, ***caractérisé en ce qu'**on* recouvre au moins partiellement la couche (3) à base de tungstène W ou de molybdène Mo d'une couche (4) en un métal ou alliage métallique différent du tungstène ou du molybdène, notamment en cuivre ou en argent.

4. Procédé selon la revendication 3, ***caractérisé en ce qu'**on* recouvre au moins partiellement la couche (4) métallique d'une couche de protection (5) métallique en au moins un métal choisi parmi Ni, Cr, Ti, Ta, Nb, Pd, Zr.

5. Procédé de dépôt selon l'une des revendications précédentes, ***caractérisé en ce qu'**on* grave au moins une des couches (2, 3, 4, 5) une fois déposées sur le substrat (1).

6. Procédé de dépôt selon la revendication 5, ***caractérisé en ce qu'**on* grave la couche de W ou de Mo puis on dépose la couche de Cu et/ou d'Ag par électrolyse.

7. Procédé de dépôt selon la revendication 5, ***caractérisé en ce qu'**on* dépose les couches de W ou de Mo et la couche de Cu et/ou d'Ag et **en ce qu'**on les grave ensuite.

8. Procédé de dépôt selon l'une des revendications 6 ou 7, ***caractérisé en ce qu'**on* grave la couche de W avec une solution contenant un mélange d'eau oxygénée et d'ammoniaque.

9. Substrat (1) obtenu par la mise en oeuvre du procédé selon l'une quelconque des revendication 1 à 8, comprenant une couche (3) à base de tungstène W et/ou de molybdène Mo déposée sur au moins une autre couche (2) électroconductrice préalablement déposée sur le substrat (1), du type oxyde métallique dopé tel que ITO, SnO₂:F, SnO₂ :Sb, ZnO :Al, et éventuellement une couche métallique (4) métallique à base d'argent et/ou de cuivre, ***caractérisé en ce que*** la couche (4) métallique est surmontée d'au moins une couche (5) protectrice, notamment essentiellement métallique à base d'au moins un des métaux Ni, Cr, Ti, Ta, Nb, Pd, Zr, notamment d'un alliage Ni-Cr, l'épaisseur de la couche (5) protectrice étant choisie entre 30 nm et 200 nm.

10. Substrat (1) selon la revendication 9, ***caractérisé en ce que*** l'épaisseur de la couche (3) à base de tungstène ou de molybdène est d'au moins 30 nm, notamment d'au plus 500 nm, de préférence comprise entre 50 nm et 300 nm.

11. Substrat (1) selon la revendication 9, ***caractérisé en ce que*** l'épaisseur de la couche (4) à base de cuivre et/ou d'argent est d'au moins 0,1 µm, notamment d'au plus 10 µm, de préférence comprise entre 0,5 et 5 µm.

12. Substrat (1) selon la revendication 9, ***caractérisé en ce que*** l'épaisseur de la couche (2) électroconductrice transparente est d'au moins 50 nm, notamment d'au plus 500 nm, de préférence comprise entre 100 nm et 400 nm s'il s'agit d'une couche en SnO₂ :F, et entre 50 et 120 nm s'il s'agit d'une couche d'ITO.

13. Substrat (1) selon la revendication 9, ***caractérisé en ce qu'**au* moins une des couches (2, 3, 4, 5) dont il est muni est gravée ou déposée de façon discontinue, en vue notamment de constituer des électrodes.

14. Application des substrats selon l'une des revendications 9 à 13 à la fabrication de miroirs, de vitrages de protection solaire, de substrats munis d'électrodes du type vitrage chauffant ou miroir chauffant, de substrats utilisés pour réaliser des écrans émissifs du type écrans plats.

## Claims

1. Process for depositing at least one layer (3) based on tungsten W and/or on molybdenum Mo by chemical vapour deposition on a glass, ceramic or glass-ceramic substrate (1) by means of at least one tungsten and/or molybdenum precursor in the form of a metal halide and/or of an organometallic compound, and by means of at least of one reducing agent, such as hydrogen or silane, **characterized in that** the tungsten-based and/or molybdenum-based layer (3) is deposited on at least one other electrically conducting layer (2) deposited beforehand on the substrate (1), of the doped metal oxide type, such as ITO, F: SnO₂, Sb: SnO₂ or Al: ZnO.

2. Process according to Claim 1, **characterized in that** the transparent electrically conducting layer (2) is deposited pyrolytically, especially by chemical vapour deposition.

3. Process according to one of the preceding claims, **characterized in that** the layer (3) based on tungsten (W) or on molybdenum (Mo) is at least partially covered with a layer (4) made of a metal or metal alloy differing from tungsten or molybdenum, especially copper or silver.

4. Process according to Claim 3, **characterized in that** the metal layer (4) is at least partially covered with a metal protective layer (5) made of at least one metal chosen from Ni, Cr, Ti, Ta, Nb, Pd, and Zr.

5. Deposition process according to one of the preceding claims, **characterized in that** at least one of the layers (2, 3, 4, 5), once deposited on the substrate, (1) is etched.

6. Deposition process according to Claim 5, **characterized in that** the W or Mo layer is etched and then the Cu and/or Ag layer is deposited electrolytically.

7. Deposition process according to Claim' 5, **characterized in that** the W or Mo layers and the Cu and/or Ag layer are deposited and **in that** they are then etched.

8. Deposition process according to one of Claims 6 or 7, **characterized in that** the W layer is etched with a solution containing a mixture of hydrogen peroxide and aqueous ammonia.

9. Substrate (1) obtained by implementing any one of Claims 1 to 8, comprising a layer (3) based on tungsten W and/or on molybdenum Mo deposited on at least another metallic metal layer (4) based on silver and/or copper, **characterized in that** the metal layer is surmounted by at least one protective layer, especially an essentially metallic layer based on at least one of the metals Ni, Cr, Ti, Ta, Nb, Pd and Zr, especially an NiCr alloy, the thickness of the protective layer (5) being chosen to be between 30 nm and 200 nm.

10. Substrate (1) according to Claim 9, ***characterized in that*** the thickness of the tungsten-based or molybdenum-based layer (3) is at least 30 nm, especially at most 500 nm, preferably between 50 nm and 300 nm.

11. Substrate (1) according to Claim 9, **characterized in that** the thickness of the copper-based and/or silver-based layer (4) is at least 0.1 µm, especially at most 10 µm, preferably between 0.5 and 5 µm.

12. Substrate (1) according to Claim 9, **characterized in that** the thickness of the transparent electrically conducting layer (2) is at least 50 nm, especially at most 500 nm, preferably between 100 nm and 400 nm if it is an F:SnO₂ layer and is between 50 and 120 nm if it is an ITO layer.

13. Substrate (1) according to Claim 9, ***characterized in that*** at least one of the layers (2, 3, 4, 5) with which it is provided is etched or deposited in a discontinuous manner, especially for the purpose of forming electrodes.

14. Application of the substrates according to one of Claims 9 to 13 to the manufacture of mirrors, of solar protection glazing, of substrates provided with electrodes of the heated window or heated mirror type, and of substrates used for producing emissive screens of the flat-screen type.

## Patentansprüche

1. Verfahren zum Aufbringen mindestens einer Schicht (3) auf der Basis von Wolfram, W, und/oder Molybdän, Mo, ausgehend von mindestens einem Wolfram- und/oder Molybdänvorläufer in Form eines Metallhalogenids und/oder einer metallorganischen Verbindung und mindestens einem Reduktionsmittel wie Wasserstoff oder Silan durch Gasphasenabscheidung auf ein Substrat (1) aus Glas, Keramik oder Glaskeramik, **dadurch gekennzeichnet, dass** die Schicht (3) auf der Basis von Wolfram und/oder Molybdän auf mindestens eine weitere elektrisch leitfähige Schicht (2) vom Typ dotiertes Metalloxid wie ITO, SnO₂:F, SnO₂:Sb und ZnO:Al, die zuvor auf das Substrat (1) aufgebracht worden ist, aufgebracht wird.

2. Verfahren nach Anspruch 1, **dadurch gekennzeichnet, dass** die transparente elektrisch leitfähige Schicht (2) durch Pyrolyse, insbesondere Gasphasenabscheidung, aufgebracht wird.

3. Verfahren nach einem der vorhergehenden Ansprüche, **dadurch gekennzeichnet, dass** die Schicht (3) auf der Basis von Wolfram, W, oder Molybdän, Mo, wenigstens teilweise mit einer Schicht (4) aus einem Metall oder einer Metalllegierung, speziell aus Kupfer oder Silber, das/die kein Wolfram oder Molybdän ist, bedeckt wird.

4. Verfahren nach Anspruch 3, **dadurch gekennzeichnet, dass** die Metallschicht (4) wenigstens teilweise mit einer metallischen Schutzschicht (5) aus mindestens einem Metall bedeckt wird, das aus Ni, Cr, Ti, Ta, Nb, Pd und Zr ausgewählt wird.

5. Abscheideverfahren nach einem der vorhergehenden Ansprüche, **dadurch gekennzeichnet, dass** mindestens eine der Schichten (2, 3, 4, 5) geätzt wird, nachdem sie auf das Substrat (1) aufgebracht worden ist.

6. Abscheideverfahren nach Anspruch 5, **dadurch gekennzeichnet, dass** die W-oder Mo-Schicht geätzt und anschließend die Cu- und/oder Ag-Schicht durch Elektrolyse aufgebracht wird.

7. Abscheideverfahren nach Anspruch 5, **dadurch gekennzeichnet, dass** die W-oder Mo-Schicht und die Cu- und/oder Ag-Schicht aufgebracht werden, und dass sie anschließend geätzt werden.

8. Abscheideverfahren nach Anspruch 6 oder 7, **dadurch gekennzeichnet, dass** die W-Schicht mit einer Lösung geätzt wird, die ein Gemisch aus mit Sauerstoff angereichertem Wasser und Ammoniak enthält.

9. Substrat (1), das durch die Durchführung des Verfahrens nach einem der Ansprüche 1 bis 8 erhalten worden ist und eine Schicht (3) auf der Basis von Wolfram, W, und/oder Molybdän, Mo, die auf mindestens eine weitere elektrisch leitfähige Schicht (2) vom Typ dotiertes Metalloxid wie ITO, SnO₂:F, SnO₂:Sb und ZnO:Al, die zuvor auf das Substrat (1) aufgebracht worden ist, aufgebracht ist, und gegebenefalls eine Metallschicht (4) auf der Basis von Silber und/oder Kupfer umfasst, **dadurch gekennzeichnet, dass** die Metallschicht (4) mit mindestens einer insbesondere im Wesentlichen metallischen Schutzschicht (5) auf der Basis von mindestens einem der Metalle Ni, Cr, Ti, Ta, Nb, Pd und Zr, speziell einer Ni-Cr-Legierung, bedeckt ist, wobei die Dicke der Schutzschicht (5) zwischen 30 und 200 nm gewählt wird.

10. Substrat (1) nach Anspruch 9, **dadurch gekennzeichnet, dass** die Dicke der Schicht (3) auf der Basis von Wolfram oder Molybdän mindestens 30 nm, insbesondere höchstens 500 nm, und vorzugsweise 50 bis 300 nm beträgt.

11. Substrat (1) nach Anspruch 9, **dadurch gekennzeichnet, dass** die Dicke der Schicht (4) auf der Basis von Kupfer und/oder Silber mindestens 0,1 µm, insbesondere höchstens 10 µm, und vorzugsweise 0,5 bis 5 µm beträgt.

12. Substrat (1) nach Anspruch 9, **dadurch gekennzeichnet, dass** die Dicke der transparenten elektrisch leitfähigen Schicht (2) mindestens 50 nm, insbesondere höchstens 500 nm, und vorzugsweise 100 bis 400 nm, wenn es sich um eine SnO₂:F-Schicht handelt, und zwischen 50 und 120 nm, wenn es sich um eine ITO-Schicht handelt, beträgt.

13. Substrat (1) nach Anspruch 9, **dadurch gekennzeichnet, dass** mindestens eine der Schichten (2, 3, 4, 5), mit welchen es versehen ist, geätzt oder diskontinuierlich aufgebracht ist, insbesondere, um Elektroden zu bilden.

14. Verwendung der Substrate nach einem der Ansprüche 9 bis 13 zur Herstellung von Spiegeln, Sonnenschutzgläsern, mit Elektroden versehenen Substraten vom Typ beheizbare Verglasung oder beheizbarer Spiegel und Substraten, die für die Herstellung von Bildschirmen vom Typ Flachbildschirme verwendet werden.
